# EUROPÄISCHE PATENTANMELDUNG

(11) **EP 4 614 018 A1**
(43) Veröffentlichungstag der Anmeldung: **10.09.2025**
(21) Anmeldenummer: 25158302.7
(22) Anmeldetag: 17.02.2025
(51) Int. Cl.: F16C 32/04

(54) **MAGNETLAGERVORRICHTUNG UND ELEKTROMAGNETISCHER DREHANTRIEB**

(30) Priorität: 05.03.2024 EP 24161381
(71) Anmelder: Levitronix GmbH, 8048 Zürich (CH)
(72) Erfinder: Steinert, Daniel, 8180 Bülach (CH)
(74) Vertreter: IPS Irsch AG

(57) **Zusammenfassung**

Magnetlagervorrichtung zur berührungslos magnetischen Lagerung eines Rotors (3), der einen scheibenförmigen oder ringförmigen magnetisch wirksamen Kern (31) aufweist, wobei die Magnetlagervorrichtung einen Stator (2) mit einer becherförmigen Ausnehmung (211) aufweist, die an einem axialen Ende des Stators (2) angeordnet ist, und in die der Rotor (3) einsetzbar ist, wobei der Stator (2) eine Mehrzahl von Spulenkernen (25) aufweist, von denen jeder einen Längsschenkel (26) und ein Polstück (27) aufweist, wobei sich jeder Längsschenkel (26) von einem ersten Ende (261) in einer axialen Richtung (A) bis zu einem zweiten Ende (262) erstreckt, wobei am zweiten Ende (262) eine Kontaktfläche (271) angeordnet ist, wobei sich jedes Polstück (27) von der Kontaktfläche (271) zumindest teilweise in einer radialer Richtung (R) bis zu einer Stirnfläche (272) erstreckt, wobei die radiale Richtung (R) senkrecht zur axialen Richtung (A) ist, wobei die Stirnflächen (272) um die becherförmige Ausnehmung (211) herum angeordnet sind, wobei an jedem Längsschenkel (26) mindestens eine konzentrierte Wicklung (61) angeordnet ist, welche den jeweiligen Längsschenkel (26) umgibt, wobei jedes Polstück (27) geblecht aus Querelementen (273) hergestellt ist, und wobei die Querelemente (273) in axialer Richtung (A) gestapelt sind. Ferner wird ein elektromagnetischer Drehantrieb mit einer solchen Magnetlagervorrichtung vorgeschlagen.

## Beschreibung

Die Erfindung betrifft eine Magnetlagervorrichtung gemäss dem Oberbegriff des unabhängigen Patentanspruchs und einen elektromagnetischen Drehantrieb mit einer solchen Magnetlagervorrichtung.

Magnetlagervorrichtungen zur berührungslos magnetischen Lagerung eines Rotors haben den Vorteil, dass sie ohne mechanische Lager für den Rotor auskommen. Der Rotor wird mittels magnetischer Kräfte gelagert bzw. stabilisiert, die von einem Stator der Magnetlagervorrichtung generiert werden. Aufgrund der Abwesenheit von mechanischen Lagern eignen sich solche Magnetlagervorrichtungen insbesondere für Pump-, Misch-, Zentrifugier- oder Rührvorrichtungen, mit denen sehr empfindliche Substanzen gefördert werden, beispielsweise Blutpumpen, oder bei denen sehr hohe Anforderungen an die Reinheit gestellt werden, beispielsweise in der pharmazeutischen Industrie oder in der biotechnologischen Industrie, oder mit denen abrasive oder aggressive Substanzen gefördert werden, welche mechanische Lager sehr schnell zerstören würden, beispielsweise Pumpen oder Mischer für Slurry, Schwefel-, Phosphorsäure oder andere Chemikalien in der Halbleiterindustrie.

In der biotechnologischen Industrie werden solche Magnetlagervorrichtungen beispielsweise im Zusammenhang mit Bioreaktoren eingesetzt, z. B. bei Zentrifugalpumpen zum Fördern der Fluide in den oder aus dem Bioreaktor, oder bei Mischvorrichtungen, welche die Fluide in dem Bioreaktor durchmischen. In der Halbleiterindustrie werden solche Magnetlagervorrichtung nicht nur für das Fördern aggressiver oder abrasiver Substanzen verwendet, sondern beispielsweise auch für Rotationsvorrichtungen, mit denen Wafer rotiert werden.

Auch ist es bekannt, Magnetlagervorrichtungen für Viskosimeter zu verwenden.

Eine vorteilhafte und an sich bekannte Ausführungsform einer Magnetlagervorrichtung ist die Ausführung in Tempelbauweise, auf die sich auch die vorliegende Erfindung bezieht.

Das Charakteristische der Tempelbauweise ist es, dass der Stator der Magnetlagervorrichtung eine Mehrzahl von Spulenkernen aufweist, von denen jeder einen Längsschenkel umfasst, der sich von einem ersten Ende in einer axialen Richtung bis zu einem zweiten Ende erstreckt. Mit der axialen Richtung ist dabei diejenige Richtung gemeint, welche durch die Solldrehachse des Rotors definiert ist, welcher mit der Magnetlagervorrichtung gelagert wird. Die Solldrehachse ist diejenige Drehachse, um welche der Rotor im Betriebszustand rotiert, wenn er bezüglich des Stators in einer zentrierten und unverkippten Position ist. Jeder Spulenkern umfasst zusätzlich zu dem Längsschenkel einen Querschenkel, auch Polstück genannt, welcher jeweils an dem zweiten Ende des Längsschenkels angeordnet ist, und welcher sich in radialer Richtung - üblicherweise nach innen - erstreckt, wobei die radiale Richtung senkrecht zur axialen Richtung ist. Der Querschenkel erstreckt sich also im Wesentlichen rechtwinklig zum Längsschenkel. Die Spulenkerne haben jeweils die Form eines L, wobei die Querschenkel die kurzen Schenkel des L bilden. Der zu lagernde Rotor ist dann zwischen den Querschenkeln angeordnet.

Die Mehrzahl der Längsschenkel, die sich in axialer Richtung erstrecken und an die Säulen eines Tempels erinnern, hat dieser Bauweise ihren Namen gegeben.

In einer Ausführungsform hat der Stator der Magnetlagervorrichtung beispielsweise sechs Spulenkerne, die kreisförmig und äquidistant um eine becherförmige Ausnehmung herum angeordnet sind, in welche der Rotor eingesetzt werden kann. Die ersten Enden der Längsschenkel sind üblicherweise in Umfangsichtung durch einen Rückschluss verbunden, welcher der magnetischen Flussführung dient. Der zu lagernde Rotor umfasst einen magnetisch wirksamen Kern, beispielsweise eine permanentmagnetische Scheibe oder einen permanentmagnetischen Ring, der zwischen den radial innenliegenden Enden der Querschenkel angeordnet ist und im Betriebszustand um die axiale Richtung rotiert, wobei der Rotor berührungslos magnetisch bezüglich des Stators gelagert ist.

Für solche Magnetlagervorrichtungen ist es nicht notwendiger Weise so, dass der magnetisch wirksame Kern des Rotors permanentmagnetisch ausgestaltet sein muss. Es sind auch solche Ausgestaltungen bekannt, bei denen der magnetisch wirksame Kern des Rotors permanentmagnetfrei, also ohne Permanentmagnete ausgestaltet ist. Der magnetisch wirksame Kern des Rotors ist dann beispielsweise ferromagnetisch ausgestaltet und besteht beispielsweise aus Eisen, Nickel-Eisen, Kobalt-Eisen, Silizium-Eisen, Mu-Metall oder einem anderen ferromagnetischen Werkstoff.

Ferner sind Ausgestaltungen möglich, bei denen der magnetisch wirksame Kern des Rotors sowohl ferromagnetische Materialien als auch permanentmagnetische Materialien umfasst. Beispielsweise können Permanentmagnete in einen ferromagnetischen Grundkörper eingelegt bzw. eingesetzt werden. Solche Ausgestaltungen sind z.B. vorteilhaft, wenn man bei grossen Rotoren die Kosten durch Einsparen von permanentmagnetischem Material reduzieren will.

Um die für die berührungslos magnetische Lagerung des Rotors notwendigen elektromagnetischen Felder zu erzeugen, tragen die Längsschenkel Wicklungen. Die Wicklungen sind beispielsweise so ausgestaltet, dass um jeden Längsschenkel herum eine konzentrierte Wicklung gewickelt ist, das heisst, die Spulenachse jeder konzentrierten Wicklung erstreckt sich jeweils in axialer Richtung. Dabei ist es typisch für die Tempelbauweise, dass die Spulenachsen der konzentrierten Wicklungen in der axialen Richtung verlaufen und, dass die konzentrierten Wicklungen nicht in der radialen Ebene angeordnet sind, in welcher der Rotor bzw. der magnetisch wirksame Kern des Rotors im Betriebszustand gelagert wird.

Es sind Ausgestaltungen möglich, bei denen auf jedem Längsschenkel genau eine konzentrierte Wicklung angeordnet ist. In anderen Ausgestaltungen sind auf jedem Längsschenkel mehrere, beispielsweise genau zwei konzentrierte Wicklungen vorgesehen. Auch sind Ausgestaltungen möglich, bei denen Wicklungen vorgesehen sind, die um zwei in Umfangsrichtung benachbarte Längsschenkel herumgewickelt sind, sodass sich diese beiden benachbarten Längsschenkel beide im Innenraum der konzentrierten Wicklung befinden.

Die Spulenkerne, der aus dem Stand der Technik bekannten Magnetlagervorrichtungen sind meist geblecht ausgestaltet. Das bedeutet, dass mehrere Bleche in Form der Spulenkerne gegeneinander isoliert in Umfangsrichtung gestapelt sind.

Die geblechte Ausgestaltung der Spulenkerne verhindert Wirbelströme für Magnetfelder, welche in Blechrichtung verlaufen also Felder, welche in axialer Richtung dem Längsschenkel folgen und in radialer Richtung dem Querschenkel folgen.

Für Magnetfelder, welche seitlich, also in Umfangsrichtung aus den Blechen des Längsschenkels und des Querschenkels austreten, ist die Isolation der Bleche unwirksam und es treten somit trotzdem Wirbelströme auf, da diese Magnetfelder orthogonal durch die Bleche hindurchgehen.

Gerade bei Magnetlagervorrichtungen, welche einen grossen magnetischen Spalt, wobei der magnetische Spalt als Abstand zwischen der Stirnfläche des Polstücks und des magnetisch wirksamen Kerns des Rotors in radialer Richtung definiert ist, aufweisen, werden orthogonale Feldanteile nicht vernachlässigbar und erzeugen merkliche Wirbelstromverluste.

Im Kontext dieser Anmeldung ist mit einem grossen magnetischen Spalt ein magnetischer Spalt gemeint, welcher grösser als 1% des Durchmessers des magnetisch wirksamen Kerns in radialer Richtung ist. In manchen Fällen kann der magnetische Spalt grösser gleich 5% des Durchmessers des magnetisch wirksamen Kerns in radialer Richtung sein.

Ausgehend von diesem Stand der Technik ist es daher eine Aufgabe der Erfindung, eine Magnetlagervorrichtung zur berührungslos magnetischen Lagerung eines Rotors mit einem scheibenförmigen oder ringförmigen magnetisch wirksamen Kern vorzuschlagen, welche geringere Wirbelstromverluste als der bisherige Stand der Technik aufweist.

Ferner ist es eine Aufgabe der Erfindung, einen elektromagnetischen Drehantrieb mit einer solchen Magnetlagervorrichtung vorzuschlagen.

Der diese Aufgabe lösende Gegenstand der Erfindung ist durch die Merkmale des unabhängigen Patentanspruchs gekennzeichnet.

Erfindungsgemäss wird also eine Magnetlagervorrichtung vorgeschlagen zur berührungslos magnetischen Lagerung eines Rotors, der einen scheibenförmigen oder ringförmigen magnetisch wirksamen Kern aufweist, wobei die Magnetlagervorrichtung einen Stator mit einer becherförmigen Ausnehmung aufweist, die an einem axialen Ende des Stators angeordnet ist, und in die der Rotor einsetzbar ist, wobei der Stator eine Mehrzahl von Spulenkernen aufweist, von denen jeder einen Längsschenkel und ein Polstück aufweist, wobei sich jeder Längsschenkel von einem ersten Ende in einer axialen Richtung bis zu einem zweiten Ende erstreckt, wobei am zweiten Ende eine Kontaktfläche angeordnet ist, wobei sich jedes Polstück von der Kontaktfläche zumindest teilweise in einer radialer Richtung bis zu einer Stirnfläche erstreckt, wobei die radiale Richtung senkrecht zur axialen Richtung ist, wobei die Stirnflächen um die becherförmige Ausnehmung herum angeordnet sind, wobei an jedem Längsschenkel mindestens eine konzentrierte Wicklung angeordnet ist, welche den jeweiligen Längsschenkel umgibt, wobei jedes Polstück geblecht aus Querelementen hergestellt ist, und wobei die Querelemente in axialer Richtung gestapelt sind.

Die meisten Wirbelstromverluste treten an den Polstücken auf, da der Abstand benachbarter Polstücke, insbesondere an deren, der becherförmigen Ausnehmung zugewandten Enden besonders klein ist. Der Grund hierfür ist, dass die Wirbelstromverluste vor allem aus orthogonalen Feldern, also Felder, welche die Querelemente orthogonal durchdringen, resultieren. Solche orthogonalen Felder haben eben gerade bei kleinen Abständen der Polstücken zueinander die Möglichkeit in Umfangsrichtung vom Polstück eines ersten Spulenkerns zum Polstück eines zweiten, benachbarten Spulenkerns zu fliessen. Durch die in axialer Richtung gestapelten Querelement des Polstücks werden orthogonale Felder in Umfangsrichtung verhindert. Dies führt dazu, dass die Wirbelstromverluste drastisch reduziert werden.

Dadurch ergibt sich ein weiterer wichtiger Vorteil. Die Stirnflächen der Polstücke können in Umfangsrichtung deutlich näher aneinander angeordnet werden da Felder, welche in Umfangsrichtung vom Polstück eines ersten Spulenkerns zum Polstück eines zweiten, benachbarten Spulenkerns fliessen parallel zu den in axialer Richtung gestapelten Querelementen fliessen und somit keine Wirbelstromverluste erzeugen. Somit kann z.B. die passive Steifigkeit und die aktiven Lagerkräfte verbessert werden und/oder ist eine kompaktere Bauweise des Stators möglich.

Das Anbringen eines Polstücks an einen Längsschenkel kann durch mehrere mögliche Fügearten erfolgen. Diese umfassen unter anderem eine kraftschlüssige Fügeart, wie z.B. Klemmen oder Crimpen, eine formschlüssige Fügeart, wie z.B. Schrauben oder Stecken oder eine stoffschlüssige Verbindung, wie z.B. Kleben. Ebenso ist es möglich, die Verbindung zwischen Längsschenkel und Polstück über Nut-Feder-Verbindungen und/oder Spundungen, wie z.B. Zapfen, Zinken oder Schwalbenschwanzverbindungen herzustellen. In einer bevorzugten Ausführungsform wird die stoffschlüssige Fügeart durch Kleben umgesetzt.

Gemäss einer bevorzugten Ausgestaltung ist jeder Längsschenkel geblecht aus Längselementen hergestellt, wobei die Längselemente in Umfangsrichtung des Stators gestapelt sind.

Gemäss einer bevorzugten Ausgestaltung sind die Querelemente und/oder die Längselemente aus Elektroblech hergestellt.

Unter einem Elektroblech wird nach der allgemeinen Definition ein weichmagnetischer Werkstoff für Magnetkerne verstanden. Als weichmagnetische Werkstoffe bezeichnet man üblicherweise Werkstoffe welche eine tiefe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem weichmagnetischen Werkstoff ein Material verstanden, welches eine Koerzitivfeldstärke, genauer gesagt eine Koerzitivfeldstärke der magnetischen Polarisation aufweist, die weniger als 2'000 A/m beträgt.

Ebenso besteht die Möglichkeit Mu-Metall für das Querelement und/oder das Längselement zu verwenden.

Gemäss einer bevorzugten Ausgestaltung ist die Kontaktfläche planar ausgestaltet ist und an einer Fläche des Längsschenkels angeordnet, die senkrecht auf der radialen Richtung steht. Besonders bevorzugt ist hierbei die Kontaktfläche am zweiten Ende des Längsschenkels angeordnet.

Gemäss einer bevorzugten Ausgestaltung ist die Stirnfläche des Polstücks als gekrümmte Fläche ausgestaltet. Besonders bevorzugt ist dabei, dass die Stirnfläche koaxial zur becherförmigen Ausnehmung ausgestaltet und angeordnet ist. In anderen Worten, die Stirnfläche des Polstücks ist ein Segment einer Zylinderoberfläche, wobei die Mittelachse dieses Zylinders mit der Mittelachse der becherförmigen Ausnehmung zusammenfällt und dessen Radius grösser ist als der der becherförmigen Ausnehmung, sodass die Stirnfläche nicht in die becherförmige Ausnehmung hineinragt.

Des Weiteren ist bevorzugt, dass die Stirnfläche bezüglich der Umfangrichtung breiter ausgestaltet ist als die maximale Erstreckung der Kontaktfläche in Umfangsrichtung. Das bedeutet, dass eine der beiden Kanten der Stirnfläche, welche sich in Umfangsrichtung erstrecken, länger ist als eine der Kanten der Kontaktfläche, welche sich in Umfangsrichtung erstrecken. Ist die Stirnfläche als gekrümmte Fläche ausgestaltet, so ist die Länge einer der Kreisbögen des Segments der Zylinderoberfläche in der radialen Ebene grösser als die Länge einer der Kanten der Kontaktfläche, welche sich in Umfangsrichtung erstrecken.

Diese Verbreiterung der Stirnfläche in Umfangrichtung hat den Vorteil, da dadurch die magnetische Funktionalität begünstigt wird. Zum Beispiel können die passive Steifigkeit und die aktiven Lagerkräfte verbessert werden.

In Kombination mit der Ausgestaltung der Polstücke mit Querelementen ergibt sich ein weiterer Vorteil. Die Stirnflächen können bezüglich der Umfangsrichtung deutlich breiter ausgestaltet werden, d.h. deren Erstreckung in Umfangsrichtung kann deutlich grösser sein als die aus dem Stand der Technik bekannten Stirnflächen von Spulenkernen. Im Umkehrschluss kann der Abstand zweier Stirnflächen zweier benachbarter Spulenkern deutlich verringert werden. Der Grund hierfür ist, dass die seitlich aus dem Polstück austretenden Felder parallel zu den in axialer Richtung gestapelten Querelementen fliessen und somit keine zusätzlichen Wirbelströme erzeugt werden.

Gemäss einer bevorzugten Ausgestaltung weist die Stirnfläche mindestens einen Schlitz auf, welcher sich in axialer Richtung erstreckt. Das heisst, in anderen Worten, dass sich der mindestens eine Schlitz in jeglicher Länge in der Stirnfläche in axialer Richtung erstrecken kann.

Gemäss einer bevorzugten Ausgestaltung erstreckt sich der mindestens eine Schlitz von einem axial ersten Ende des Polstücks zu einem axial zweiten Ende des Polstücks. Diese Erstreckung wäre somit die maximal mögliche Erstreckung eines Schlitzes in der Stirnfläche in axialer Richtung.

Für eine mögliche Ausgestaltung, in der die Stirnfläche mehr als einen Schlitz aufweist ist es möglich, dass sich ein Schlitz von einem ersten Ende des Polstücks in axialer Richtung erstreckt und ein zweiter Schlitz sich vom axial zweiten Ende des Polstücks in zum ersten Schlitz entgegengesetzter axialer Richtung erstreckt. Dabei ist es möglich, dass die beiden Schlitze jeweils eine Erstreckung in axialer Richtung aufweisen, die kleiner ist als 50% der Erstreckung der Stirnfläche in axialer Richtung. Das heisst, in anderen Worten die Stirnfläche weist zwei Schlitze auf, die sich in der Mitte der Stirnfläche nicht berühren und sich somit dort mindestens ein Querelement des Polstücks befindet, welches nicht vom Schlitz erfasst wird.

Das Einbringen von mindestens einem Schlitz in die Stirnfläche des Spulenkerns stellt eine elektrische Isolation dar. Das heisst, der mindestens eine Schlitz sorgt dafür, dass der Pfad der Wirbelströme in den Querelementen des Polstücks unterbrochen und somit blockiert wird. Somit können Wirbelströme, die durch in axialer Richtung aus den Querelementen austretende Magnetfelder resultieren verhindert werden. Dies hat zur Folge, dass lediglich kleine Wirbelströme im Spulenkern verbleiben und die Wirbelstromverluste im Spulenkern insgesamt drastisch reduziert werden. Es ist dabei vorteilhaft, dass der mindestens eine Schlitz parallel oder zumindest näherungsweise parallel zum Verlauf des magnetischen Felds im Querelementen des Polstücks verlaufen sollte, um diesen nicht zu blockieren.

Die Fertigung der Schlitze, kann über diverse Methoden erfolgen. Zu diesen zählen unter anderem mechanische Verfahren, wie z.B. Fräsen, Stanzen oder Schneiden, wobei zu letzterem auch der Einsatz von Lasern und/oder Wasserstrahlschneidern und/oder Drahterodieren zählt.

Ferner ist es bevorzugt, dass eine Erstreckung des mindestens einen Schlitzes in radialer Richtung kleiner ist als die Erstreckung des Polstücks in radialer Richtung. In bevorzugten Ausgestaltungen ist die Erstreckung des mindestens einen Schlitzes in radialer Richtung im Bereich von 5-30% der Erstreckung des Polstücks in radialer Richtung. Ebenso ist es möglich, dass die Erstreckung mehr als 30% aufweist, also z.B. 40% oder 50% oder sogar 99% der Erstreckung des Polstücks. Gerade in Ausgestaltungen in denen sich der mindestens eines Schlitz nicht durch alle Querelement des Polstücks erstreckt, sind grössere Erstreckungen des mindestens einen Schlitzes in radialer Richtung möglich. In diesem Fall ist es sogar denkbar, dass 100% erreicht wird.

Gemäss einer bevorzugten Ausgestaltung sind mehrere Schlitze parallel oder näherungsweise parallel zueinander in der Stirnfläche angeordnet. In vorteilhaften Ausgestaltungen sind die mehreren Schlitze senkrecht zur Stirnfläche angeordnet.

Die Anordnung der mehreren Schlitze parallel zueinander ist vorteilhaft, da sie dadurch auch parallel oder zumindest näherungsweise parallel zum Verlauf des magnetischen Felds im Spulenkern verlaufen, sodass sie diesen nicht blockieren.

Gemäss einer bevorzugten Ausgestaltung weist jeder Spulenkern an einem axial oberen Ende eine Abrundung auf, welche den Spulenkern aus der axialen Richtung in die radiale Richtung umlenkt.

Als Beispiel, im Fall eines L-Förmigen Spulenkerns, wobei das lange Stück des "L" durch den Längsschenkel und das kurze Stück des "L" durch das Polstück gebildet wird, ist die von der becherförmigen Ausnehmung betrachtet radial aussen liegende Kante des Polstücks, die sich in der radialen Ebene in Umfangsrichtung erstreckt, abgerundet ausgestaltet. Diese Ausgestaltung hat den Vorteil, dass sie geringere Wirbelstromverluste aufweist und auch im Hinblick auf die Konstruktion einfacher umzusetzen ist. Diese Ausgestaltung kann mit allen möglichen Ausgestaltungen der Stirnfläche und der Polstücke bzw. Längsschenkel umgesetzt werden.

Gemäss einer bevorzugten Ausgestaltung weist jeder Spulenkern eine erste laterale Begrenzungsfläche und eine zweite laterale Begrenzungsfläche auf, wobei mindestens eine der ersten oder der zweiten lateralen Begrenzungsflächen mindestens einen Schlitz aufweist.

Das Einbringen von Schlitzen in mindestens eine der beiden lateralen Begrenzungsflächen des Spulenkerns stellt eine elektrische Isolation dar. Das heisst, der mindestens eine Schlitz sorgt dafür, dass der Pfad der Wirbelströme im Spulenkern unterbrochen und somit blockiert wird. Dies hat zur Folge, dass lediglich kleine Wirbelströme im Spulenkern verbleiben und die Wirbelstromverluste im Spulenkern insgesamt drastisch reduziert werden. Es ist dabei vorteilhaft, dass der mindestens eine Schlitz parallel oder zumindest näherungsweise parallel zum Verlauf des magnetischen Felds im Spulenkern verlaufen sollte, um diesen nicht zu blockieren.

Wie weit sich der mindestens eine Schlitz im Längsschenkel in axialer Richtung in Richtung des ersten Endes des Längsschenkels erstreckt ist variabel. Von einer geringen Erstreckung von 5% der Gesamtlänge des Längsschenkels in axialer Richtung bis zu einer Erstreckung hin zum ersten Ende des Längsschenkels sind alle Länge des mindestens einen Schlitzes möglich.

Ebenso ist es möglich, dass der mindestens eine Schlitz eine Rundung aufweist, welche den Schlitz aus der radialen Richtung in die axiale Richtung umlenkt.

Ebenso sind Ausgestaltungen möglich, bei denen sich der mindestens eine Schlitz von der ersten lateralen Begrenzungsfläche bis zu der zweiten lateralen Begrenzungsfläche erstreckt.

In anderen Ausgestaltungen ist es möglich, dass die Erstreckung des mindestens einen Schlitzes in Umfangsrichtung des Stators gesehen kürzer ist als der Abstand der ersten lateralen Begrenzungsfläche von der zweiten lateralen Begrenzungsfläche.

In anderen Worten, der mindestens eine Schlitz erstreckt sich nicht durch den gesamten Spulenkern in Umfangsrichtung des Stators. Das heisst der mindestens eine Schlitz ist nicht in allen Längselementen der geblechten Ausgestaltung des Spulenkerns vorgesehen. Dies ist vorteilhaft, da gerade in den Längselementen, welche direkt bzw. nahe an den beiden lateralen Begrenzungsflächen angeordnet sind, der Grossteil der Wirbelströme entsteht. Somit werden durch den mindestens einen Schlitz die Pfade der Wirbelströme im Spulenkern dort unterbrochen, wo sie am häufigsten auftreten. Dies sorgt für eine deutliche Reduktion der Wirbelstromverluste. Des Weiteren ist diese Ausgestaltung von Vorteil für die Stabilität des Spulenkerns.

Ebenso sind Ausgestaltungen möglich, wobei mehrere Schlitze vorgesehen sind, welche parallel zueinander angeordnet sind. Dabei ist die Anordnung der mehreren Schlitze parallel zueinander vorteilhaft, da sie dadurch auch parallel oder zumindest näherungsweise parallel zum Verlauf des magnetischen Felds im Spulenkern verlaufen, sodass sie diesen nicht blockieren.

Die Fertigung der Schlitze, kann über diverse Methoden erfolgen. Zu diesen zählen unter anderem mechanische Verfahren, wie z.B. Fräsen, Stanzen oder Schneiden, wobei zu letzterem auch der Einsatz von Lasern oder von Wasserstrahlschneidern zählt.

Gemäss einer bevorzugten Ausgestaltung ist am ersten Ende ein Rückschluss angeordnet, der die ersten Enden aller Längsschenkel verbindet, wobei der Rückschluss ringförmig mit einem metallischen Band ausgestaltet ist, welches sich von einem radial inneren Anfang zu einem radial äusseren Ende erstreckt, wobei das Band mehrere Bandwicklungen formt, die bezüglich der radialen Richtung flächig aneinander anliegen.

Gemäss einer besonders bevorzugten Ausführungsform ist der Stator der Magnetlagervorrichtung zur Erzeugung eines Drehmoments ausgestaltet, mit welchem der Rotor berührungslos magnetisch zur Rotation um die axiale Richtung antreibbar ist.

Hierbei ist Stator als Lager- und Antriebsstator ausgestaltet, der sowohl Stator des elektrischen Antriebs als auch Stator der magnetischen Lagerung ist. Mit den elektrischen Wicklungen des Stators lässt sich ein magnetisches Drehfeld erzeugen, welches zum einen ein Drehmoment auf den Rotor ausübt, das dessen Rotation um eine Solldrehachse bewirkt, und welches zum anderen eine beliebig einstellbare Querkraft auf den Rotor ausübt, sodass dessen radiale Position aktiv steuerbar bzw. regelbar ist.

Gerade im Hinblick auf die Ausführungsform, bei welcher die Magnetlagervorrichtung zur Erzeugung eines Drehmoments ausgestaltet ist, ist die Ausgestaltung mit der breiteren Stirnfläche von Vorteil, da dadurch die magnetische Funktionalität begünstigt wird. Zum Beispiel kann ein erhöhtes Drehmoment erzeugt werden oder aber die passive Steifigkeit oder die aktiven Lagerkräfte verbessert werden.

Durch die Erfindung wird ferner ein elektromagnetischer Drehantrieb, der als Tempelmotor ausgestaltet ist vorgeschlagen, wobei der elektromagnetische Drehantrieb eine erfindungsgemässe Magnetlagervorrichtung umfasst, sowie einen Rotor mit einem scheibenförmigen oder ringförmigen magnetisch wirksamen Kern, wobei der Rotor in die becherförmige Ausnehmung einsetzbar ist, und wobei der Rotor als Rotor des elektromagnetischen Drehantriebs ausgestaltet ist.

Solche elektromagnetischen Drehantriebe sind auch unter dem Begriff des lagerlosen Motors bekannt. Mit dem Begriff lagerloser Motor ist dabei ein elektromagnetischer Drehantrieb gemeint, bei welchem der Rotor vollkommen magnetisch bezüglich des Stators gelagert ist, wobei keine separaten magnetischen Lager vorgesehen sind.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine perspektivische Darstellung eines ersten Ausführungsbeispiels einer erfindungsgemässen Magnetlagervorrichtung,
- Fig. 2:: eine perspektivische Darstellung eines einzelnen Spulenkerns der Magnetlagerlagervorrichtung aus Fig. 1,
- Fig. 3:: eine perspektivische Darstellung einer ersten Variante eines Spulenkerns aus Fig. 2;
- Fig. 4:: eine vergrösserte Darstellung des Polstücks des Spulenkerns aus Fig. 3,
- Fig. 5:: eine perspektivische Darstellung einer zweiten Variante eines Spulenkerns aus Fig. 2;
- Fig. 6:: eine perspektivische Darstellung eines zweiten Ausführungsbeispiels einer erfindungsgemässen Magnetlagervorrichtung,
- Fig. 7: eine perspektivische Darstellung eines einzelnen Spulenkerns der Magnetlagerlagervorrichtung aus Fig. 6,
- Fig. 8:: eine perspektivische Darstellung eines dritten Ausführungsbeispiels einer erfindungsgemässen Magnetlagervorrichtung, und
- Fig. 9:: eine schematische Schnittdarstellung für eine Ausgestaltung eines Statorgehäuses.

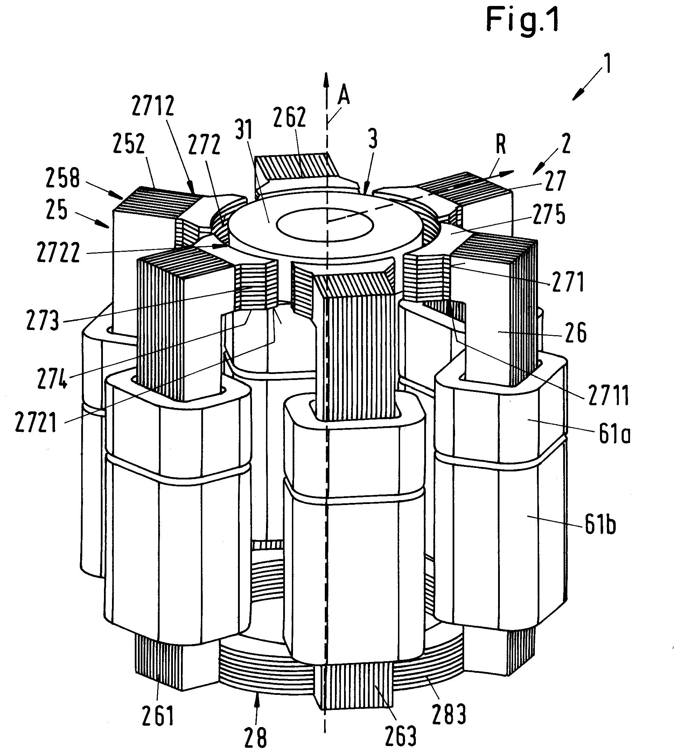

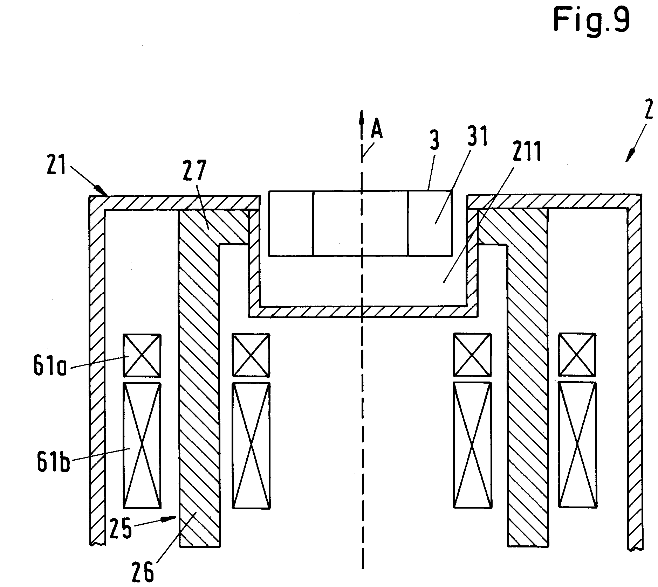

Fig. 1 zeigt eine perspektivische Darstellung eines Ausführungsbeispiels einer erfindungsgemässen Magnetlagervorrichtung, die gesamthaft mit dem Bezugszeichen 1 bezeichnet ist. Die Magnetlagervorrichtung 1 ist für die berührungslos magnetische Lagerung eines Rotors 3 ausgestaltet, der einen scheibenförmigen oder ringförmigen magnetisch wirksamen Kern 31 umfasst. Die Magnetlagervorrichtung 1 ist gemäss der Tempelbauweise ausgestaltet und umfasst einen Stator 2. Üblicherweise umfasst der Stator 2 ein Statorgehäuse 21 (Fig. 9), welches in Fig. 1 aus Gründen der besseren Übersicht allerdings nicht dargestellt ist. Daher veranschaulicht Fig. 9 in einer schematischen Schnittdarstellung eine Ausgestaltung eines Statorgehäuses 21.

An einem axialen Ende des Statorgehäuses 21 ist eine becherförmige Ausnehmung 211 vorgesehen in die der Rotor 3 einsetzbar ist. Der Rotor 3 ist zur Rotation um eine Solldrehachse ausgestaltet. Diese Solldrehachse definiert eine axiale Richtung A. Üblicherweise stimmt die Mittelachse des Stators 2, welche sich in der axialen Richtung A erstreckt, mit der Solldrehachse überein. Die Solldrehachse bezeichnet dabei diejenige Achse, um welche sich der Rotor 3 im Betriebszustand dreht, wenn sich der Rotor 3 bezüglich des Stators 2 in einer zentrierten und unverkippten Lage befindet, so wie dies in Fig. 1 dargestellt ist.

Der Stator 2 weist eine Mehrzahl von Spulenkernen 25 - hier sechs Spulenkerne 25 - auf, von denen jeder einen Längsschenkel 26 und ein Polstück 27 aufweist. Jeder Längsschenkel 26 erstreckt sich von einem ersten Ende 261 in axialer Richtung A bis zu einem zweiten Ende 262, wobei am zweiten Ende 262 eine Kontaktfläche 271 angeordnet ist, von welcher sich jedes Polstück 27 zumindest teilweise in einer radialer Richtung R bis zu einer Stirnfläche 272 erstreckt. Dabei sind die Stirnflächen 272 dem Rotor 3 zugewandt und um diesen herum angeordnet. In anderen Worten, die Polstücke 27 der Spulenkerne 25 sind derart angeordnet, dass die Stirnflächen 272 der Polstücke 27 um die becherförmige Ausnehmung 211 herum angeordnet sind. Die Spulenkerne 25 des Stators 2 sind äquidistant auf einer Kreislinie angeordnet, sodass die Stirnflächen 272 den magnetisch wirksamen Kern 31 des Rotors 3 umgeben, wenn der Rotor 3 in die becherförmige Ausnehmung 211 eingesetzt ist.

In diesem Ausführungsbeispiel ist die Kontaktfläche 271 planar ausgestaltet und an einer Fläche des Längsschenkels 26 angeordnet, die senkrecht auf der radialen Richtung R steht.

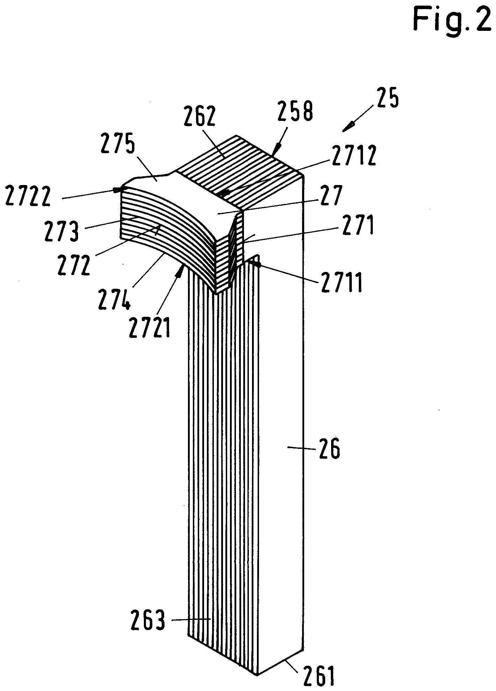

Zum besseren Verständnis ist in Fig. 2 eine perspektivische Darstellung eines einzelnen Spulenkerns 25 der Magnetlagerlagervorrichtung 1 aus Fig. 1 dargestellt.

An jedem Längsschenkel 26 ist mindestens eine konzentrierte Wicklung 61 angeordnet, welche den jeweiligen Längsschenkel 26 umgibt. In anderen Ausführungsformen können an den Längsschenkeln 26 auch mehr als eine konzentrierte Wicklung angeordnet sein. Beispielsweise gibt es Ausführungsbeispiele, wie hier in Fig. 1 dargestellt, bei denen an jedem der Längsschenkel 26 jeweils genau zwei konzentrierte Wicklungen 61a, 61b vorgesehen sind, von denen jede den jeweiligen Längsschenkel 26 umgibt, wobei die beiden auf dem gleichen Längsschenkel 26 angeordneten Wicklungen 61a, 61b bezüglich der axialen Richtung A benachbart zueinander angeordnet sind.

Die konzentrierten Wicklungen 61 dienen dazu, elektromagnetische Felder zu erzeugen, mit welchen der Rotor 3 berührungslos magnetisch in der becherförmigen Ausnehmung 211 (Fig. 9) lagerbar ist.

In dem in Fig. 1 dargestellten ersten Ausführungsbeispiel der erfindungsgemässen Magnetlagervorrichtung 1 sind die Polstücke 27 geblecht aus Querelementen 273 hergestellt und dieses Querelemente 273 in axialer Richtung A gestapelt.

Durch die in axialer Richtung gestapelten Querelement 273 des Polstücks 27 werden Felder, welche in Umfangsrichtung fliessen, parallel zur Blechebene geführt. Dies führt dazu, dass die Wirbelstromverluste drastisch reduziert werden.

Dadurch ergibt sich ein weiterer wichtiger Vorteil. Die Stirnflächen 272 der Polstücke 27 können in Umfangsrichtung deutlich näher aneinander angeordnet werden da in Umfangsrichtung vom Polstück 27 eines ersten Spulenkerns 25 zum Polstück 27 eines zweiten, benachbarten Spulenkerns 25 fliessende Felder keine zusätzlichen Wirbelstromverluste erzeugen. Somit kann z.B. die passive Steifigkeit und die aktiven Lagerkräfte verbessert werden und/oder ist eine kompaktere Bauweise des Stators möglich. Das Anbringen eines Polstücks 27 an einen Längsschenkel 26 kann durch mehrere mögliche Fügearten erfolgen. Diese umfassen unter anderem eine kraftschlüssige Fügeart, wie z.B. Klemmen oder Crimpen, eine formschlüssige Fügeart, wie z.B. Schrauben oder Stecken oder eine stoffschlüssige Verbindung, wie z.B. Kleben. Ebenso ist es möglich, die Verbindung zwischen Längsschenkel 26 und Polstück 27 über Nut-Feder-Verbindungen und/oder Spundungen, wie z.B. Zapfen, Zinken oder Schwalbenschwanzverbindungen herzustellen. In einer bevorzugten Ausführungsform wird die stoffschlüssige Fügeart durch Kleben umgesetzt.

Die Stirnflächen 272 der Polstücke 27 sind hier als gekrümmte Flächen ausgestaltet, welche koaxial zur becherförmigen Ausnehmung 211 angeordnet sind. Dabei ist die Stirnfläche 272 bezüglich der Umfangrichtung breiter ausgestaltet als die maximale Erstreckung der Kontaktfläche 271 in Umfangsrichtung. Mit Umfangsrichtung ist die Richtung gemeint, welche senkrecht auf der radialen Richtung R und senkrecht auf der axialen Richtung A steht.

Die Stirnfläche 272 des Polstücks 27 kann somit als ein Segment einer Zylinderoberfläche angesehen werden, wobei die Mittelachse dieses Zylinders mit der Mittelachse der becherförmigen Ausnehmung 211, in diesem Ausführungsbeispiel die Achse der axialen Richtung A, zusammenfällt und dessen Radius grösser ist als der der becherförmigen Ausnehmung 211, sodass die Stirnfläche 272 nicht in die becherförmige Ausnehmung 211 hineinragt.

In anderen Worten bedeutet dies, dass eine der beiden Kanten 2721 oder 2722 der Stirnfläche 272, welche sich in Umfangsrichtung erstrecken, länger ist als eine der Kanten 2711 oder 2712 der Kontaktfläche, welche sich in Umfangsrichtung erstrecken. Ist die Stirnfläche 272 als gekrümmte Fläche ausgestaltet, so ist die Länge einer der Kreisbögen 2721 oder 2722 des Segments der Zylinderoberfläche in einer radialen Ebene grösser als die Länge einer der Kanten 2711 oder 2712 der Kontaktfläche 271, welche sich in Umfangsrichtung erstrecken. Die radiale Ebene ist in Fig. 1 durch die Linie einer radialen Richtung R angedeutet, die senkrecht auf der axialen Richtung A steht. Die radiale Ebene ist diejenige Ebene, welche senkrecht auf der axialen Richtung A steht und eine radiale Richtung R enthält. Die radiale Ebene ist diejenige Ebene, in welcher der magnetisch wirksame Kern 31 des Rotors 3 im Betriebszustand zwischen den Stirnflächen 272 im Stator 2 aktiv magnetisch gelagert ist. Wenn der Rotor 3 nicht verkippt und in axialer Richtung A nicht ausgelenkt ist, liegt die magnetische Mittelebene in der radialen Ebene. Die radiale Ebene definiert die x-y-Ebene eines kartesischen Koordinatensystems, dessen z-Achse in axialer Richtung A verläuft.

Mit der radialen Position des magnetisch wirksamen Kerns 31 bzw. des Rotors 3 wird die Lage des Rotors 3 in der radialen Ebene bezeichnet.

Der Längsschenkel 26 ist in diesem Ausführungsbeispiel ebenfalls geblecht aus Längselementen 263 hergestellt, wobei die Längselemente 263 in Umfangsrichtung des Stators 2 gestapelt sind.

Die Längselemente 263 und die Querelemente 273 können aus Elektroblech hergestellt sein. Unter einem Elektroblech wird nach der allgemeinen Definition ein weichmagnetischer Werkstoff für Magnetkerne verstanden. Ebenso besteht die Möglichkeit Mu-Metall für das Band zu verwenden.

Die Anzahl der Längselemente 263 und der Querelemente 273 in allen Ausführungsbeispielen und Figuren ist rein exemplarisch zu verstehen. Die Anzahl kann grösser oder aber auch kleiner sein als dargestellt.

Gemäss einer speziell bevorzugten Ausgestaltung ist der Stator 2 so ausgestaltet, dass er zusätzlich zur berührungslos magnetischen Lagerung des Rotors 3 auch ein Drehmoment auf den Rotor 3 bzw. den magnetisch wirksamen Kern 31 des Rotors 3 ausüben kann, welches den Rotor 3 zu einer Rotation um die Solldrehachse antreibt. Das heisst, bei dieser bevorzugten Ausgestaltung ist der Rotor 3 zur Rotation um die axiale Richtung A antreibbar.

Die bereits erwähnte Verbreiterung der Stirnfläche 272 in Umfangrichtung hat den Vorteil, dass dadurch die magnetische Funktionalität begünstigt wird. Zum Beispiel können die passive Steifigkeit und die aktiven Lagerkräfte verbessert werden. Im Hinblick auf die Ausführungsform, bei welcher die Magnetlagervorrichtung 1 zur Erzeugung eines Drehmoments ausgestaltet ist, ergibt sich zudem der Vorteil, dass ein erhöhtes Drehmoment erzeugt werden kann.

Bei dieser Ausgestaltung erzeugen die konzentrierten Wicklungen 61a, 61b also elektromagnetische Drehfelder, mit denen der Rotor 3 sowohl berührungslos magnetisch bezüglich des Stators 2 lagerbar ist als auch berührungslos zur Rotation um die axiale Richtung A antreibbar ist.

Es versteht sich, dass die Anzahl von sechs Spulenkernen 25 zwar bevorzugt, aber nur beispielhaft zu verstehen ist. Es sind natürlich auch solche Ausgestaltungen möglich, bei denen der Stator 2 weniger als sechs, z. B. fünf oder vier oder drei Spulenkerne 25 aufweist, oder solche Ausgestaltungen, bei denen der Stator 2 mehr als sechs, z. B. sieben oder acht oder neun Spulenkerne 25 aufweist oder eine beliebige grössere Anzahl von Spulenkernen 25.

Der Rotor 3 umfasst den magnetisch wirksamen Kern 31, welcher ring- oder scheibenförmig ausgestaltet ist. Der magnetisch wirksame Kern 31 ist gemäss der Darstellung in Fig. 1 als Ring ausgestaltet und definiert eine magnetische Mittelebene. Alternativ kann der magnetisch wirksame Kern 31 auch als Scheibe ausgestaltet sein. In der Regel ist bei einem scheibenförmigen oder ringförmigen magnetisch wirksamen Kern 31 die magnetische Mittelebene die geometrische Mittelebene des magnetisch wirksamen Kerns 31 des Rotors 3, die senkrecht zur axialen Richtung A liegt. Im Betriebszustand ist der magnetisch wirksame Kern 31 in der radialen Ebene gelagert, welche senkrecht auf der axialen Richtung A steht.

Da es für das Verständnis der Erfindung ausreichend ist, ist in Fig. 1 von dem Rotor 3 nur der magnetisch wirksame Kern 31 dargestellt. Es versteht sich, dass der Rotor 3 natürlich auch noch weitere Komponenten umfassen kann wie beispielsweise Ummantelungen oder Kapselungen, die vorzugsweise aus einem Kunststoff hergestellt sind, oder aus einem Metall oder aus einer Metalllegierung oder aus einer Keramik bzw. einem keramischen Werkstoff. Ferner kann der Rotor 3 auch Flügel zum Mischen, Rühren oder Pumpen von Fluiden oder sonstige Komponenten umfassen.

Wenn der Rotor 3 in die becherförmige Ausnehmung 211 (Fig. 9) eingesetzt ist, wird der Rotor 3 und insbesondere der magnetisch wirksame Kern 31 des Rotors 3 von den radial aussenliegend angeordneten Stirnflächen 272 des Polstücks 27 der Spulenkerne 25 des Stators 2 umgeben. Die Polstücke 27 bilden somit eine Mehrzahl von ausgeprägten Statorpolen- hier sechs Statorpole.

Wenn sich der magnetisch wirksame Kern 31 des Rotors 3 während des Betriebs in seiner Soll-Position befindet, so ist der magnetisch wirksame Kern 31 zwischen den Stirnflächen 272 der Polstücke 27 zentriert. Die konzentrierten Wicklungen 61 sind darstellungsgemäss unterhalb der radialen Ebene angeordnet und so ausgerichtet, dass ihre Spulenachsen in axialer Richtung A verlaufen.

Alle ersten Enden 261 der Längsschenkel 26 - also die darstellungsgemäss (Fig. 1) unteren Enden 261 - sind durch einen Rückschluss 28 miteinander verbunden. Der Rückschluss 28 ist vorzugsweise ringförmig ausgestaltet. Dabei sind solche Ausgestaltungen möglich (siehe z. B. Fig. 1), bei welchen sich der Rückschluss 28 radial innenliegend entlang aller ersten Enden 261 der Längsschenkel 26 erstreckt.

Um die für die magnetische Lagerung des Rotors 3 und optional zur Erzeugung eines Drehmoments auf den Rotor 3 notwendigen elektromagnetischen Felder zu erzeugen, tragen die Längsschenkel 26 der Spulenkerne 25 die als konzentrierte Wicklungen 61 ausgestalteten Wicklungen.

Mit diesen konzentrierten Wicklungen 61 werden im Betriebszustand diejenigen elektromagnetischen Drehfelder erzeugt, mit welchen eine beliebig einstellbare Querkraft in radialer Richtung auf den Rotor 3 ausübbar ist, sodass die radiale Position des Rotors 3, also seine Position in der zur axialen Richtung A senkrechten radialen Ebene, aktiv steuerbar bzw. regelbar ist. Optional wird mit diesen elektromagnetischen Drehfeldern zusätzlich ein Drehmoment auf den Rotor 3 bewirkt.

Mit dem "magnetisch wirksamen Kern 31" des Rotors 3 ist derjenige Bereich des Rotors 3 gemeint, welcher für die Erzeugung der magnetischen Lagerkräfte und optional für die Drehmomentbildung magnetisch mit dem Stator 2 zusammenwirkt.

Wie bereits erwähnt, ist der magnetisch wirksame Kern 31 bei diesem Ausführungsbeispiel ringförmig ausgestaltet. Ferner ist der magnetisch wirksame Kern 31 permanentmagnetisch ausgestaltet. Dazu kann der magnetisch wirksame Kern 31 mindestens einen Permanentmagneten, aber auch mehrere Permanentmagnete umfassen oder - wie im hier beschriebenen Ausführungsbeispiel - vollständig aus einem permanentmagnetischen Material bestehen, sodass der magnetisch wirksame Kern 31 der Permanentmagnet ist. Der magnetisch wirksame Kern 31 ist beispielsweise in radialer Richtung magnetisiert.

Als Permanentmagnete bezeichnet man üblicherweise solche ferromagnetischen oder ferrimagnetischen Werkstoffe, die hartmagnetisch sind, also eine hohe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem Permanentmagneten ein Werkstoff bzw. ein Material verstanden, der eine Koerzitivfeldstärke, genauer gesagt eine Koerzitivfeldstärke der magnetischen Polarisation aufweist, die mehr als 10'000 A/m beträgt.

Es sind auch solche Ausgestaltungen möglich, bei denen der magnetisch wirksame Kern 31 permanentmagnetfrei, also ohne Permanentmagnete ausgestaltet ist. Der Rotor 3 ist dann z.B. als Reluktanzläufer ausgestaltet. Der magnetisch wirksame Kern 31 des Rotors 3 besteht dann beispielsweise aus einem weichmagnetischen Material. Geeignete weichmagnetische Materialien für den magnetisch wirksamen Kern 31 sind beispielsweise ferromagnetische oder ferrimagnetische Materialien, also insbesondere Eisen, Nickel-Eisen, Kobalt-Eisen, Silizium-Eisen, Mu-Metall.

Ferner sind Ausgestaltungen möglich, bei denen der magnetisch wirksame Kern 31 des Rotors 3 sowohl ferromagnetische Materialien als auch permanentmagnetische Materialien umfasst. Beispielsweise können Permanentmagnete in einen ferromagnetischen Grundkörper eingelegt bzw. eingesetzt werden. Solche Ausgestaltungen sind z.B. vorteilhaft, wenn man bei grossen Rotoren die Kosten durch Einsparen von permanentmagnetischem Material reduzieren will.

Auch sind Ausgestaltungen möglich, bei denen der Rotor nach dem Prinzip eines Käfigläufers ausgestaltet ist.

Der Stator 2 ist frei von Permanentmagneten. Mit dieser Bezeichnung, dass der Stator 2 "frei von Permanentmagneten" ausgestaltet ist, soll im Rahmen dieser Anmeldung verstanden werden, dass der Stator 2 keine Permanentmagnete umfasst, die einen wesentlichen Beitrag zum Antriebsfeld zum Antreiben der Rotation des Rotors 3 oder zur Generierung der magnetischen Lagerkräfte für den Rotor 3 leisten. Der generierte magnetische Fluss durch den Stator 2 für den Antrieb und die Lagerung des Rotors 3 umfasst also keinen permanentmagnetisch erregten Fluss.

Es ist natürlich möglich, dass der Rotor 3 und/oder der Stator 2 andere Magnete bzw. Permanentmagnete umfassen, beispielsweise in Sensoren, welche z. B. der Erfassung der Winkel-stellung des Rotors dienen, oder die sonst einen Zweck erfüllen, der nichts mit dem Generieren des magnetischen Flusses für den Antrieb und die Lagerung des Rotors 3 zu tun hat.

Die Bezeichnung "frei von Permanentmagneten" bezieht sich also nur auf die Generierung des magnetischen Flusses für den Antrieb und die Lagerung des Rotors 3 durch den Stator 2. In anderen Worten, der Stator 2 weist keine Permanentmagnete auf, welche einen Beitrag zum magnetischen Fluss leisten, mittels welchem der Rotor 3 angetrieben und magnetisch gelagert wird.

Es ist aber trotzdem möglich, dass der magnetische Fluss für den Antrieb und die Lagerung des Rotors 3 einen permanentmagnetischen Fluss umfasst, aber dieser wird dann nur vom Rotor 3 selbst generiert. Dies wäre der Fall, wenn der Rotor 3 selbst einen Permanentmagneten umfassen sollte.

Der ringförmige Rückschluss 28 kann aus einem weichmagnetischen Material gefertigt sein, da dieses zur Führung des magnetischen Flusses gut geeignet ist. Ebenso ist es möglich, dass auch die Spulenkerne 25 des Stators 2 aus einem weichmagnetischen Material gefertigt sind.

Geeignete weichmagnetische Materialien für die Spulenkerne 25 und den Rückschluss 28 sind beispielsweise ferromagnetische oder ferrimagnetische Materialien, also insbesondere Eisen, Nickel-Eisen, Kobalt-Eisen Silizium-Eisen oder Mu-Metall. Hierbei ist für den Stator 2 eine Ausgestaltung als Statorblechpaket bevorzugt, bei welcher der Rückschluss 28, geblecht ausgestaltet ist, das heisst er besteht aus mehreren dünnen Blechelementen, auch Rückschlusselemente 283 genannt, die parallel zueinander in axialer Richtung A aufeinandergestapelt sind. Alle Rückschlusselemente 283 sind identisch ausgestaltet, hier also jeweils im Wesentlichen ringförmig und auch mit der gleichen Dicke. Somit ist der Rückschluss 28 selbst im Wesentlichen ringförmig ausgestaltet und erstreckt sich im zusammengesetzten Zustand radial innenliegend entlang der ersten Enden 261 der Längsschenkel 26.

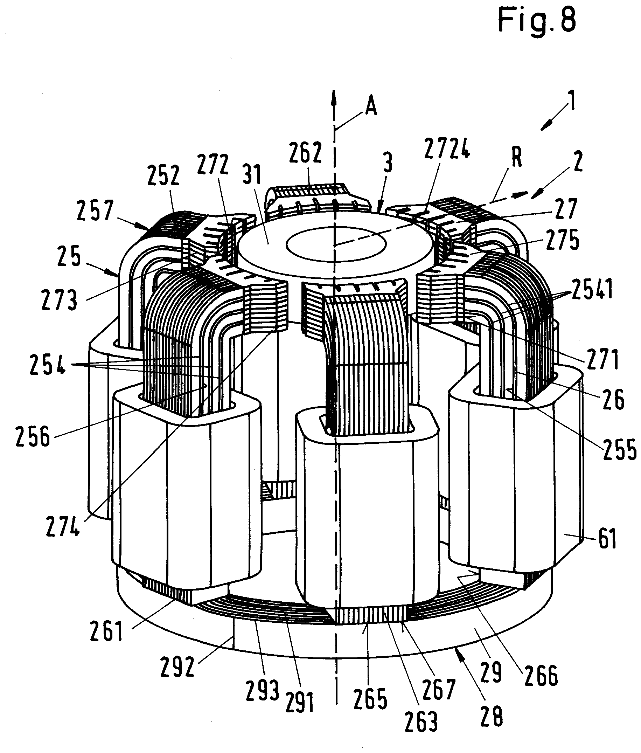

Ebenso sind Ausgestaltungen möglich bei welchen als Rückschluss 28 ein sogenannter Ringbandkern verwendet wird. Dabei handelt es sich um ein aufgewickeltes Band 29. Solch eine Ausgestaltung ist in dem dritten Ausführungsbeispiel realisiert, das in Fig. 8 dargestellt ist.

Ferner ist es möglich, dass der Rückschluss 28 aus gepressten und anschliessend gesinterten Körnern der genannten Materialien bestehen. Die metallischen Körner sind dabei vorzugsweise in eine Kunststoffmatrix eingebettet, sodass sie zumindest teilweise gegeneinander isoliert sind, wodurch sich Wirbelstromverluste minimieren lassen. Es sind also für den Stator auch weichmagnetische Verbundwerkstoffe geeignet, welche aus elektrisch isolierten und zusammengepressten Metallpartikeln bestehen. Insbesondere können diese weichmagnetischen Verbundwerkstoffe, die auch als SMC (Soft Magnetic Composites) bezeichnet werden, aus Eisenpulverpartikeln bestehen, die mit einer elektrisch isolierenden Schicht beschichtet sind. Diese SMC werden dann mittels pulvermetallurgischer Verfahren zu der gewünschten Ausgestaltung geformt.

Während des Betriebs der Magnetlagervorrichtung 1 wirkt der magnetisch wirksame Kern 31 des Rotors 3 mit dem Stator 2 zusammen, derart, dass der Rotor 3 berührungslos magnetisch bezüglich des Stators 2 lagerbar ist, und vorzugsweise zusätzlich berührungslos magnetisch in Rotation um die axiale Richtung A versetzt werden kann. Dabei ist es besonders vorteilhaft, dass dieselben Wicklungen 61 mit denen die magnetische Lagerung des Rotors 3 bewirkt wird, auch zur Erzeugung eines Drehmoments auf den Rotor 3 dienen. Vorzugsweise sind dann drei Freiheitsgrade des Rotors 3, nämlich seine Position in der radialen Ebene und seine Rotation, aktiv regelbar. Bezüglich seiner axialen Auslenkung aus der radialen Ebene in axialer Richtung A ist der magnetisch wirksame Kern 31 des Rotors 3 passiv magnetisch, das heisst nicht ansteuerbar, durch Reluktanzkräfte stabilisiert. Auch bezüglich der verbleibenden zwei Freiheitsgrade, nämlich Verkippungen bezüglich der zur Solldrehachse senkrechten radialen Ebene ist der magnetisch wirksame Kern 31 des Rotors 3 ebenfalls passiv magnetisch stabilisiert. Der Rotor 3 ist also durch das Zusammenwirken des magnetisch wirksamen Kerns 31 mit den Spulenkernen 25 in axialer Richtung A sowie gegen Verkippungen (insgesamt drei Freiheitsgrade) passiv magnetisch gelagert oder passiv magnetisch stabilisiert und in der radialen Ebene (zwei Freiheitsgrade) aktiv magnetisch gelagert.

Wie dies allgemein üblich ist, bezeichnet auch im Rahmen dieser Anmeldung eine aktive magnetische Lagerung eine solche, die aktiv steuer- bzw. regelbar ist, beispielsweise über die mit den konzentrierten Wicklungen 61 generierten elektromagnetischen Felder. Eine passive magnetische Lagerung oder eine passive magnetische Stabilisierung bezeichnet eine solche, die nicht ansteuerbar bzw. regelbar ist. Die passive magnetische Lagerung oder Stabilisierung basiert beispielsweise auf Reluktanzkräften, welche den Rotor 3 bei einer Auslenkung aus seiner Soll-Position, also z. B. bei einer Verschiebung oder Auslenkung in axialer Richtung A oder bei einer Verkippung, wieder in seine Soll-Position bringen.

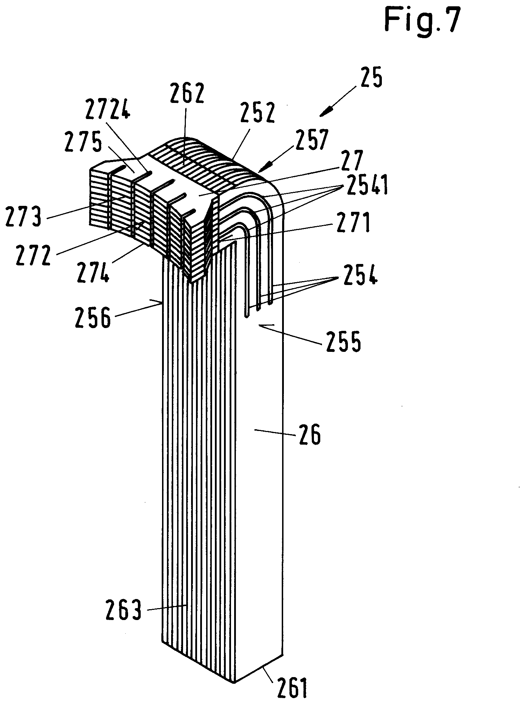

Bei der Magnetlagervorrichtung 1 wird im Unterschied zu klassischen Magnetlagern die magnetische Lagerung - und optional die Generierung eines auf den Rotor wirkenden Drehmoments - über elektromagnetische Drehfelder realisiert. Zur kombinierten Erzeugung der magnetischen Lagerkräfte und eines Drehmoments zum Rotieren des Rotors 3 um die axiale Richtung A ist es einerseits möglich - wie in Fig 7 gezeigt-, an jedem Längsschenkel 26 genau eine konzentrierte Wicklung 61 anzuordnen.

Andererseits sind auch Ausgestaltungen möglich, bei denen zur kombinierten Erzeugung der magnetischen Lagerkräfte und eines Drehmoments zum Rotieren des Rotors 3 zwei unterschiedliche Wicklungssysteme vorgesehen sind. Dazu sind dann beispielsweise, wie in Fig. 1 dargestellt, an jedem Längsschenkel jeweils genau zwei konzentrierte Wicklungen 61a, 61b angeordnet, die bezüglich der axialen Richtung A benachbart zueinander angeordnet sind. Eine dieser beiden Wicklungen 61a, 61b gehört zu dem ersten der beiden Wicklungssystem und die andere zu dem zweiten der beiden Wicklungssysteme.

Bei der in Fig. 8 dargestellten Ausführungsform mit genau einer konzentrierten Wicklung 61 an jedem Spulenkern 25 werden beispielsweise die in einer Kontrolleinheit jeweils ermittelten Werte für den für die Lagerung benötigten Strom und den für die Erzeugung des Drehmoments benötigten Strom rechnerisch -also z. B. mit Hilfe von Software - addiert bzw. überlagert. Der sich daraus ergebende Gesamtstrom wird dann in die jeweilige konzentrierte Wicklung 61 eingeprägt.

Ist der Stator 2 der erfindungsgemässen Magnetlagervorrichtung 1 zur Erzeugung eines Drehmoments ausgestaltet, so ist die Magnetlagervorrichtung 1 für einen elektromagnetischen Drehantrieb, der als Tempelmotor ausgestaltet ist, geeignet. Ebenso ist es möglich, dass die erfindungsgemässe Magnetlagervorrichtung 1 auch für andere Vorrichtungen wie z.B. Zentrifugalpumpen, Mischvorrichtungen zum Mischen fliessfähiger Substanzen, Rührvorrichtungen, beispielsweise zum Durchmischen eines Fluids in einem Tank, Lüfter oder auch Vorrichtungen zum Tragen und Rotieren von Wafern, beispielsweise in der Halbleiterfertigung, geeignet ist.

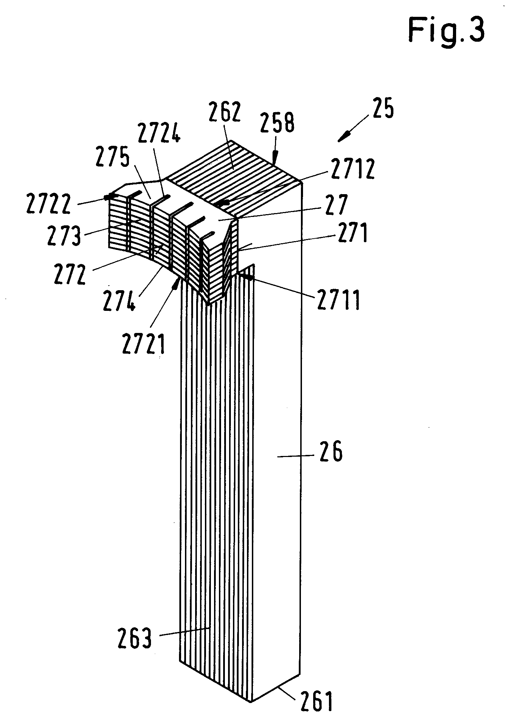

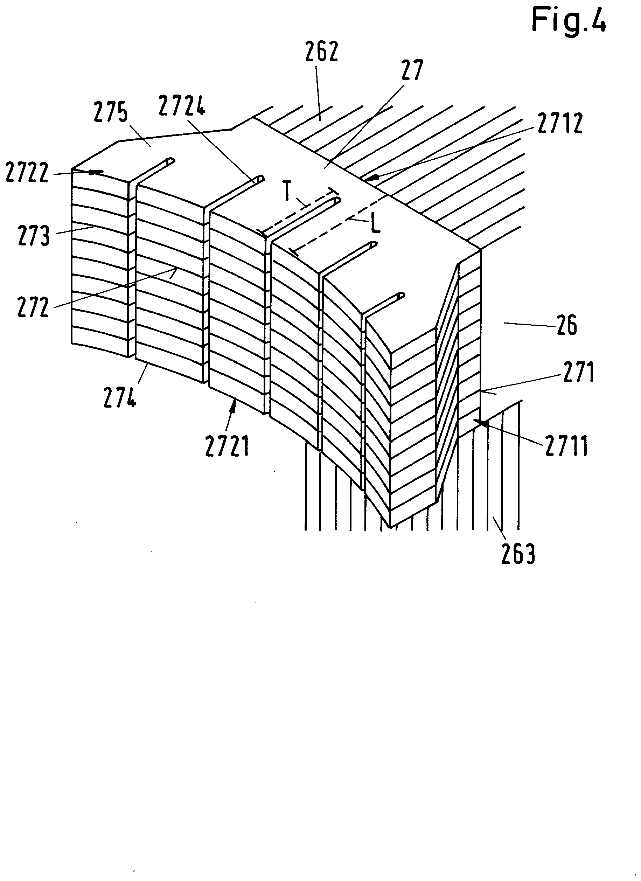

Fig. 3 zeigt eine perspektivische Darstellung einer ersten Variante eines Spulenkerns 25 aus Fig. 2. Ein Unterschied zur ersten Variante besteht darin, dass die Stirnfläche 272 mindestens einen Schlitz 2724 aufweist, wobei sich der mindestens eine Schlitz 2724 von einem axial ersten Ende 274 des Polstücks 27 zu einem axial zweiten Ende 275 des Polstücks 27 erstreckt. Zum besseren Verständnis ist in Fig. 4 eine vergrösserte Darstellung des Polstücks 27 des Spulenkerns 25 aus Fig. 3 dargestellt.

Das Einbringen von mindestens einem Schlitz 2724 in die Stirnfläche 272 des Spulenkerns 25 stellt eine elektrische Isolation dar. Das heisst, der mindestens eine Schlitz 2724 sorgt dafür, dass der Pfad der Wirbelströme in den Querelementen 273 des Polstücks 27 unterbrochen und somit blockiert wird. Dies hat zur Folge, dass lediglich kleine Wirbelströme im Spulenkern 25 verbleiben und die Wirbelstromverluste im Spulenkern 25 insgesamt drastisch reduziert werden. Es ist dabei vorteilhaft, dass der mindestens eine Schlitz 2724 parallel oder zumindest näherungsweise parallel zum Verlauf des magnetischen Felds im Querelementen 273 des Polstücks 27 verlaufen sollte, um diesen nicht zu blockieren.

Die Fertigung der Schlitze 2724, kann über diverse Methoden erfolgen. Zu diesen zählen unter anderem mechanische Verfahren, wie z.B. Fräsen, Stanzen oder Schneiden, wobei zu letzterem auch der Einsatz von Lasern und/oder Wasserstrahlschneidern und/oder Drahterodieren zählt.

In dieser Variante des Spulenkerns 25 sind mehrere Schlitze 2724 - hier fünf Schlitze 2724 - parallel zueinander in der Stirnfläche 272 angeordnet. Die Anzahl der der Schlitze 2724 in allen Ausführungsbeispielen und Figuren ist rein exemplarisch zu verstehen. Die Anzahl kann grösser oder aber auch kleiner sein als dargestellt. Ebenso ist es möglich, dass die Schlitze 2724 nur näherungsweise parallel zueinander sein können, wie z.B. gegeneinander geneigt oder gekrümmt. Wichtig dabei ist, dass sie dem Feldverlauf des magnetischen Flusses folgen. Dieser hängt unter anderem von der äusseren Form des Polstücks 27 bzw. der Querelemente 273 ab.

In diesem Ausführungsbeispiel ist eine Erstreckung T der Schlitze 2724 in radialer Richtung R kleiner als die Erstreckung L des Polstücks 27 in radialer Richtung R.

In bevorzugten Varianten ist die Erstreckung T des mindestens einen Schlitzes 2724 in radialer Richtung R im Bereich von 5-30% der Erstreckung L des Polstücks 272 in radialer Richtung R. Ebenso ist es möglich, dass die Erstreckung T mehr als 30% aufweist, also z.B. 40% oder 50% oder sogar 99% der Erstreckung L des Polstücks 27.

Für die hier dargestellte Ausgestaltung eines Spulenkerns 25, wobei die Stirnfläche 272 als gekrümmte Fläche ausgestaltet ist, gilt, dass die Erstreckung T für jeden einzelnen Schlitz 2724 einzeln zu bestimmen ist, da die Länge L durch die Krümmung an jedem Punkt auf der Kante 2722 unterschiedlich ist. Aus diesem Grund weisen die Schlitze 2724 in dieser Variante des Spulenkerns 25 verglichen miteinander unterschiedliche Erstreckungen T auf.

Ebenso sind auch Varianten des Spulenkerns 25 möglich bei welchen die Schlitze 2724 alle dieselbe Erstreckung T aufweisen. Dies kann sowohl für Spulenkern 25 mit gekrümmter Stirnfläche 272 der Fall sein wie auch für Spulenkerne 25 mit nicht gekrümmter Stirnfläche 272 wie in der Variante des Spulenkerns 25 in Fig. 2. Natürlich ist es auch möglich, dass bei nicht gekrümmten Stirnflächen 272 die Schlitze 2724 unterschiedliche Erstreckungen T aufweisen können.

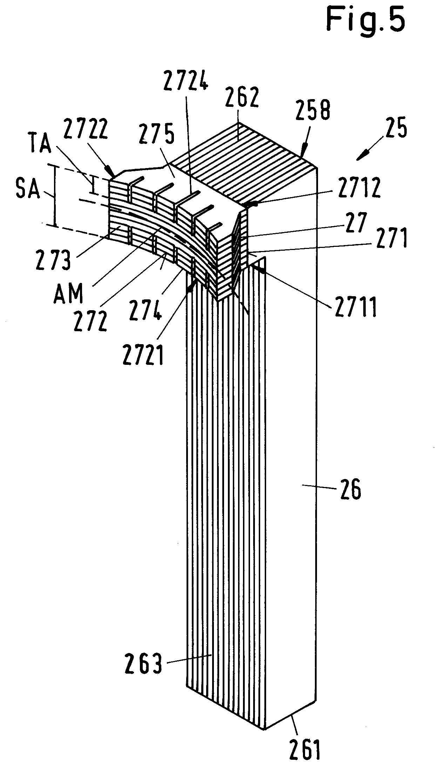

Fig. 5 zeigt eine perspektivische Darstellung einer zweiten Variante eines Spulenkerns 25 aus Fig. 2. In der folgenden Beschreibung der zweiten Variante eines Spulenkerns werden nur die Unterschiede zur ersten Variante aus Fig. 3/4 näher erläutert. Die Erläuterungen zur ersten Variante gelten in gleicher Weise oder sinngemäss auch für die zweite Variante. Gleiche Bezugsziffern bezeichnen die gleichen Merkmale, die unter Bezugnahme auf die erste Variante erläutert wurden, oder funktionell gleichwertige Merkmale.

Die zweite Variante eines Spulenkerns 25 weist in der Stirnfläche 272 Schlitze 2724 auf, welche sich in axialer Richtung A erstrecken aber sich nicht durch alle Querelemente 273 erstrecken. Eine erste Anzahl von Schlitzen 2724 erstrecken sich vom axial ersten Ende 274 des Polstücks 27 in axialer Richtung A und eine zweite Anzahl von Schlitzen 2724 erstrecken sich vom axial zweiten Ende 275 des Polstücks 27 in zur ersten Anzahl von Schlitzen 2724 entgegengesetzter axialer Richtung A. Dabei ist der Betrag jeder Erstreckung TA aller Schlitze 2724 in axialer Richtung A jeweils kleiner als 50% der Erstreckung SA der Stirnfläche 272 in axialer Richtung A. Das heisst, in anderen Worten die Stirnfläche 272 weist eine erste Anzahl an Schlitzen 2724 auf, die ihren Anfang am axial ersten Ende 274 haben und eine zweite Anzahl an Schlitzen 2724, die ihren Anfang am axial zweiten Ende 275 haben, auf, sodass sich die erste Anzahl und die zweite Anzahl an Schlitzen 2724 in der axialen Mitte AM der Stirnfläche 272 nicht berühren und sich somit dort mindestens ein Querelement 273 des Polstücks 27 befindet, welches nicht von den Schlitzen 2724 erfasst wird.

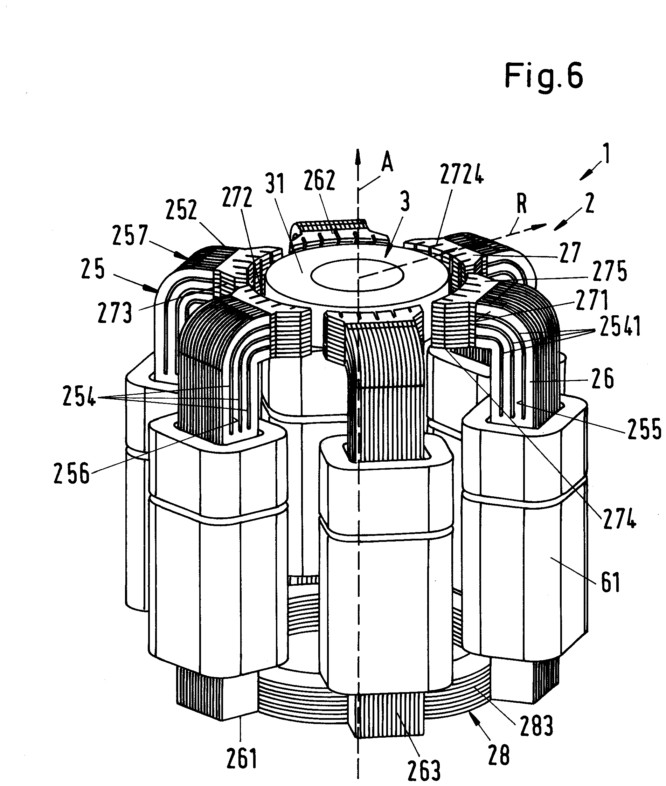

In dieser Variante sind Erstreckungen T des mindestens einen Schlitzes 2724 in radialer Richtung R möglich die sogar gleich gross der Erstreckung L des Polstücks 27 in radialer Richtung R sind. Fig. 6 zeigt eine perspektivische Darstellung eines zweiten Ausführungsbeispiels einer erfindungsgemässen Magnetlagervorrichtung 1. In Fig. 7 ist zum besseren Verständnis eine perspektivische Darstellung eines einzelnen Spulenkerns 25 der Magnetlagerlagervorrichtung 1 aus Fig. 6 dargestellt. In der folgenden Beschreibung des zweiten Ausführungsbeispiels der Magnetlagervorrichtung 1 werden nur die Unterschiede zum ersten Ausführungsbeispiel aus Fig. 1 näher erläutert. Die Erläuterungen zum ersten Ausführungsbeispiel gelten in gleicher Weise oder sinngemäss auch für das zweite Ausführungsbeispiel. Gleiche Bezugsziffern bezeichnen die gleichen Merkmale, die unter Bezugnahme auf das erste Ausführungsbeispiel erläutert wurden, oder funktionell gleichwertige Merkmale.

Ein Unterschied ist, dass jeder Spulenkern 25 an einem axial oberen Ende 252 eine Abrundung 257 aufweist, welche den Spulenkern aus der axialen Richtung A in die radiale Richtung R umlenkt.

Als Beispiel, im Fall eines L-Förmigen Spulenkerns 25, wobei das lange Stück des "L" durch den Längsschenkel 26 und das kurze Stück des "L" durch das Polstück 27 gebildet wird, ist die von der becherförmigen Ausnehmung 211 betrachtet radial aussen liegende Kante 258 (Fig. 1-Fig. 3) des Polstücks 27, die sich in der radialen Ebene in Umfangsrichtung erstreckt, abgerundet ausgestaltet. Diese Ausgestaltung hat den Vorteil, dass sie geringere Wirbelstromverluste aufweist und auch im Hinblick auf die Konstruktion einfacher umzusetzen ist. Diese Ausgestaltung kann mit allen möglichen Ausgestaltungen der Stirnfläche 272 und der Polstücke 27 bzw. Längsschenkel 26 umgesetzt werden.

Jeder Spulenkern 25 weist eine erste laterale Begrenzungsfläche 255 und eine zweite laterale Begrenzungsfläche 256 auf, wobei mindestens eine der ersten oder der zweiten lateralen Begrenzungsflächen 255, 256 mindestens einen Schlitz 254 aufweist. In diesem Ausführungsbeispiel sind sowohl in der ersten wie auch in der zweiten lateralen Begrenzungsflächen 255, 256 jeweils drei Schlitze 254 angeordnet. Die Schlitze 254 erstrecken sich im Längsschenkel 26. Das Einbringen der Schlitze 254 in die beiden lateralen Begrenzungsflächen 255, 256 des Spulenkerns 25 stellt eine elektrische Isolation dar. Das heisst, die Schlitze 254 sorgen dafür, dass der Pfad der Wirbelströme im Spulenkern 25 unterbrochen und somit blockiert werden. Dies hat zur Folge, dass lediglich kleine Wirbelströme im Spulenkern 25 verbleiben und die Wirbelstromverluste im Spulenkern 25 insgesamt drastisch reduziert werden.

Jeder der Schlitze 254 weist in diesem Ausführungsbeispiel eine Rundung 2541 auf, welche den jeweiligen Schlitz 254 aus der radialen Richtung R in die axiale Richtung A umlenkt. Die Schlitze 254 sind parallel zueinander und parallel oder zumindest näherungsweise parallel zum Verlauf des magnetischen Felds im Spulenkern 25 angeordnet. Dies hat den Vorteil, dass die Schlitze 254 dadurch den Verlauf des magnetischen Felds im Spulenkern 25 nicht behindern und/oder blockieren.

In diesem Ausführungsbeispiel ist die Erstreckung der Schlitze 254 in Umfangsrichtung des Stators 2 gesehen kürzer als der Abstand der ersten lateralen Begrenzungsfläche 255 von der zweiten lateralen Begrenzungsfläche 256. In anderen Worten, die Schlitze 254 durchdringen nicht alle Längselemente 263 der Spulenkerne 25, sondern nur eine bestimmte Anzahl.

Dies ist vorteilhaft, da gerade in den Längselementen 263, welche direkt bzw. nahe an den beiden lateralen Begrenzungsflächen 255, 256 angeordnet sind, der Grossteil der Wirbelströme entsteht. Somit werden durch die Schlitz 254 die Pfade der Wirbelströme im Spulenkern 25 dort unterbrochen, wo sie am häufigsten auftreten. Dies sorgt für eine deutliche Reduktion der Wirbelstromverluste. Des Weiteren ist eine nicht komplette Durchdringung der Schlitze 254 durch alle Längselemente 263 des Spulenkerns 25 für die Stabilität des Spulenkerns 25 von Vorteil.

Es sind aber auch Ausgestaltung möglich, bei denen sich die Schlitze 254 von der ersten lateralen Begrenzungsfläche 255 bis zu der zweiten lateralen Begrenzungsfläche 256 erstrecken.

Die Schlitze 254 erstrecken sich in diesem Ausführungsbeispiel nicht über die gesamte Erstreckung des Längsschenkels 26 in axialer Richtung A, sondern nur zu einem Teil und enden vor einem axial oberen Ende der konzentrierten Wicklung 61a.

Des Weiteren sind aber auch Ausgestaltungen möglich, in denen der mindestens eine Schlitz 254 eine längere Erstreckung im Längsschenkel 26 aufweist als in der in Fig. 7 dargestellten Ausgestaltung. Solch eine mögliche Ausgestaltung ist in Fig. 8 dargestellt.

Fig. 8 zeigt eine perspektivische Darstellung eines dritten Ausführungsbeispiels einer erfindungsgemässen Magnetlagervorrichtung 1. In der folgenden Beschreibung des dritten Ausführungsbeispiels der Magnetlagervorrichtung 1 werden nur die Unterschiede zum ersten und zweiten Ausführungsbeispiel aus Fig. 1 und Fig. 6 näher erläutert. Die Erläuterungen zum ersten und zweiten Ausführungsbeispiel gelten in gleicher Weise oder sinngemäss auch für das dritte Ausführungsbeispiel. Gleiche Bezugsziffern bezeichnen die gleichen Merkmale, die unter Bezugnahme auf das erste Ausführungsbeispiel erläutert wurden, oder funktionell gleichwertige Merkmale.

Ein Unterschied des dritten Ausführungsbeispiels ist, wie bereits erwähnt, die Erstreckung der Schlitze 254 im Längsschenkel 26. Diese ist deutlich länger als die Erstreckung der Schlitze 254 der Spulenkerne 25 aus dem zweiten Ausführungsbeispiel. Die maximal mögliche Erstreckung der Schlitze 254 im Längsschenkel 26 endet am ersten Ende 261 des Längsschenkels 26. Es ist somit möglich, dass die Schlitze 254 jegliche Erstreckungslängen im Längsschenkel 26 aufweisen können.

Ein weiterer Unterschied dieses Ausführungsbeispiels einer Magnetlagervorrichtung 1 zu den Ausführungsbeispielen aus Fig. 1 und Fig. 6 ist, dass der Rückschluss 28 anders ausgestaltet ist. Der Rückschluss 28 ist ringförmig mit einem metallischen Band 29 ausgestaltet, welches sich von einem radial inneren Anfang 291 zu einem radial äusseren Ende 292 erstreckt. Das Band 29 formt mehrere Bandwicklungen 293, die bezüglich der radialen Richtung R flächig aneinander anliegen. Die Längsschenkel 26 werden am ersten Ende 261 durch eine axiale Stirnfläche 265 begrenzt, an welchen der Rückschluss 28 anliegt. Der Rückschluss 28 formt einen Kreisring, dessen radiale Breite gleich der radialen Breite der Stirnflächen 265 der Längsschenkel 26 ist. Das heisst, der radial innere Anfang 291 ist in axialer Richtung A bündig mit einer radial innenliegenden Innenfläche 266 des Längsschenkels 26 und das radial äussere Ende 292 ist in axialer Richtung A bündig mit einer radial aussenliegenden Aussenfläche 267 des Längsschenkels 26.

Dies hat unter anderem den Vorteil, dass im Inneren des Stators 2 mehr Platz vorhanden ist, der genutzt werden kann, um andere Komponenten darin zu verbauen. Dadurch kann der Stator 2 samt Statorgehäuse kleiner und kompakter gebaut werden, wodurch die Einsatzflexibilität der Magnetlagervorrichtung 1 erhöht wird.

Ein weiterer Vorteil bei solch einer Anordnung des Rückschlusses 28 ergibt sich aus der Anordnung der Bandwicklungen 293 des Bands 29 des Ringbandkerns. Dadurch dass die Bandwicklungen 293 senkrecht auf der radialen Richtung R angeordnet sind, weisen sie eine Orientierung auf, die parallel zum Magnetfeldverlauf in den Längsschenkeln 26 ist. Dadurch tritt das Magnetfeld aus den Längsschenkeln 26 in axialer Richtung A in den Rückschluss 28 ein und somit parallel zu den Bandwicklungen 293. Das heisst, das Magnetfeld durchdringt keine der Bandwicklungen 293 in radialer Richtung R wodurch Wirbelstromverluste vermieden werden.

Ebenso ist hier im dritten Ausführungsbeispiel wie bereits erwähnt an jedem Längsschenkel 26 jeweils nur eine konzentrierte Wicklung 61 angeordnet.

Es versteht sich von selbst, dass alle in der Figurenbeschreibung gezeigten Ausführungsbeispiele mit ihren jeweiligen Eigenarten untereinander in jeglicher Form kombinierbar sind.

Des Weiteren ist es möglich, dass sämtliche gezeigten Ausführungsbeispiele eines Spulenkerns 25 derart ausgestaltet sein können, dass der dem Rotor 3 zu Verfügung stehende Platz in der Magnetlagervorrichtung 1 vergrössert wird. Dies gelingt durch eine spezielle äussere Form der Spulenkerne 25.

Dabei wird der Spulenkern 25 in einen axial unteren Abschnitt und einen axial oberen Abschnitt aufgeteilt, wobei der untere Abschnitt und der obere Abschnitt bezüglich der axialen Richtung A benachbart zueinander angeordnet sind. Das Polstück 27 ist an dem axial oberen Abschnitt angeordnet. Für jeden Spulenkern 25 weist die Stirnfläche 272 des Polstücks 27 von dem axial unteren Abschnitt des zugehörigen Längsschenkels 26 einen ersten Abstand in radialer Richtung auf, und von dem axial oberen Abschnitt einen zweiten Abstand in radialer Richtung, wobei der zweite Abstand grösser ist als der erste Abstand. Dies bedeutet, dass jeder Längsschenkel 26 derart ausgestaltet ist, dass der axial obere Abschnitt bezüglich des axial unteren Abschnitts in radialer Richtung nach aussen verschoben ist, sodass sich der für den Rotor 3 zur Verfügung stehende Platz zwischen den Stirnflächen 272 vergrössert, ohne dass dabei die Gefahr eines direkten Übertritts des magnetischen Flusses zwischen dem Längsschenkel 26 und dem magnetisch wirksamen Kern 31 des Rotors 3 besteht. Dadurch, dass die axial oberen Abschnitte bezüglich der radialen Richtung und relativ zu den axial unteren Abschnitten radial nach aussen versetzt sind, vergrössert sich der Abstand, nämlich der zweite Abstand, zwischen den Längsschenkeln 26 und den Stirnflächen 272 im Bereich der axial oberen Abschnitte. Dadurch vergrössert sich auch der Abstand zwischen dem magnetisch wirksamen Kern 31 des Rotors und den Längsschenkeln 26 insbesondere im Bereich der axial oberen Abschnitte.

Solche gerade beschriebenen Spulenkerne 25 sind analog zu denen in Fig. 3 in der Europäischen Patentanmeldung EP4084304A1 abgebildeten Spulenkerne ausgebildet.

Fig. 9 zeigt eine schematische Schnittdarstellung für eine Ausgestaltung eines Statorgehäuses 21. In den Ausführungsbeispielen in Fig. 1, Fig. 6 und Fig. 8 ist dieses Statorgehäuse 21 aus Gründen der besseren Übersicht nicht dargestellt. Fig. 9 soll lediglich der Anschauung dienen, um zu zeigen, wie eine für den Betrieb der Magnetlagervorrichtung 1 notwendige Umkapselung des Inneren des Stators 2 aussieht. Aus diesem Grund sind die anderen Komponenten des Stators 2 nur schematisch dargestellt und rein anschaulich zu verstehen.

Es sind ebenso Ausgestaltungen des Statorgehäuses 21 möglich, bei denen die becherförmige Ausnehmung 211 in eine Bohrung übergeht, die sich zentral entlang der Mittelachse des Stators 2 in axialer Richtung A durch das gesamte Statorgehäuse 21 erstreckt.

Beim Betrieb der Magnetlagervorrichtung 1 in Bereichen in denen z.B. chemisch aggressive Substanzen zum Einsatz kommen, ist es wichtig, dass das Innere des Stators 2 sicher umkapselt ist und somit vor diesen Substanzen geschützt wird. Damit trotzdem ein Rotor 3 verwendet werden kann, weist das Statorgehäuse 21 eine becherförmige Ausnehmung 211 auf, in welche der Rotor 3 eingesetzt werden kann.

## Patentansprüche

1. Magnetlagervorrichtung zur berührungslos magnetischen Lagerung eines Rotors (3), der einen scheibenförmigen oder ringförmigen magnetisch wirksamen Kern (31) aufweist, wobei die Magnetlagervorrichtung einen Stator (2) mit einer becherförmigen Ausnehmung (211) aufweist, die an einem axialen Ende des Stators (2) angeordnet ist, und in die der Rotor (3) einsetzbar ist, wobei der Stator (2) eine Mehrzahl von Spulenkernen (25) aufweist, von denen jeder einen Längsschenkel (26) und ein Polstück (27) aufweist, wobei sich jeder Längsschenkel (26) von einem ersten Ende (261) in einer axialen Richtung (A) bis zu einem zweiten Ende (262) erstreckt, wobei am zweiten Ende (262) eine Kontaktfläche (271) angeordnet ist, wobei sich jedes Polstück (27) von der Kontaktfläche (271) zumindest teilweise in einer radialer Richtung (R) bis zu einer Stirnfläche (272) erstreckt, wobei die radiale Richtung (R) senkrecht zur axialen Richtung (A) ist, wobei die Stirnflächen (272) um die becherförmige Ausnehmung (211) herum angeordnet sind, und wobei an jedem Längsschenkel (26) mindestens eine konzentrierte Wicklung (61) angeordnet ist, welche den jeweiligen Längsschenkel (26) umgibt,
**dadurch gekennzeichnet, dass**
jedes Polstück (27) geblecht aus Querelementen (273) hergestellt ist, wobei die Querelemente (273) in axialer Richtung (A) gestapelt sind.

2. Magnetlagervorrichtung nach Anspruch 1, wobei jeder Längsschenkel (26) geblecht aus Längselementen (263) hergestellt ist, wobei die Längselemente (263) in Umfangsrichtung des Stators (2) gestapelt sind.

3. Magnetlagervorrichtung nach einem der vorangehenden Ansprüche, wobei die Querelemente (273) und/oder die Längselemente (263) aus Elektroblech hergestellt sind.

4. Magnetlagervorrichtung nach einem der vorangehenden Ansprüche, wobei die Kontaktfläche (271) planar ausgestaltet ist und an einer Fläche des Längsschenkels (26) angeordnet ist, die senkrecht auf der radialen Richtung (R) steht.

5. Magnetlagervorrichtung nach einem der vorangehenden Ansprüche, wobei die Stirnfläche (272) des Polstücks (27) als gekrümmte Fläche ausgestaltet ist und wobei die Stirnfläche (272) koaxial zur becherförmigen Ausnehmung (211) ausgestaltet und angeordnet ist.

6. Magnetlagervorrichtung nach einem der vorangehenden Ansprüche, wobei die Stirnfläche (272) bezüglich der Umfangrichtung breiter ausgestaltet ist als die maximale Erstreckung der Kontaktfläche (271) in Umfangsrichtung.

7. Magnetlagervorrichtung nach einem der vorangehenden Ansprüche, wobei die Stirnfläche (272) mindestens einen Schlitz (2724) aufweist, welcher sich in axialer Richtung A erstreckt.

8. Magnetlagervorrichtung nach Anspruch 7, wobei sich der mindestens eine Schlitz (2724) von einem axial ersten Ende (274) des Polstücks (27) zu einem axial zweiten Ende (275) des Polstücks (27) erstreckt.

9. Magnetlagervorrichtung nach Anspruch 7-8, wobei eine Erstreckung (T) des mindestens einen Schlitzes (2724) in radialer Richtung (R) kleiner ist als die Erstreckung (L) des Polstücks (27) in radialer Richtung (R).

10. Magnetlagervorrichtung nach Anspruch 7-9, wobei mehrere Schlitze (2724) parallel oder näherungsweise parallel zueinander in der Stirnfläche (272) angeordnet sind.

11. Magnetlagervorrichtung nach einem der vorangehenden Ansprüche, wobei jeder Spulenkern (25) an einem axial oberen Ende (252) eine Abrundung (257) aufweist, welche den Spulenkern aus der axialen Richtung (A) in die radiale Richtung (R) umlenkt.

12. Magnetlagervorrichtung nach einem der vorangehenden Ansprüche, wobei jeder Spulenkern (25) eine erste laterale Begrenzungsfläche (255) und eine zweite laterale Begrenzungsfläche (256) aufweist und wobei mindestens eine der ersten oder der zweiten lateralen Begrenzungsflächen (255, 256) mindestens einen Schlitz (254) aufweist.

13. Magnetlagervorrichtung nach einem der vorangehenden Ansprüche, wobei am ersten Ende (261) ein Rückschluss (28) angeordnet ist, der die ersten Enden (261) aller Längsschenkel (26) verbindet, wobei der Rückschluss (28) ringförmig mit einem metallischen Band (29) ausgestaltet ist, welches sich von einem radial inneren Anfang (291) zu einem radial äusseren Ende (292) erstreckt, wobei das Band (29) mehrere Bandwicklungen (293) formt, die bezüglich der radialen Richtung (R) flächig aneinander anliegen.

14. Magnetlagervorrichtung nach einem der vorangehenden Ansprüche, wobei der Stator (2) zur Erzeugung eines Drehmoments ausgestaltet ist, mit welchem der Rotor (3) berührungslos magnetisch zur Rotation um die axiale Richtung (A) antreibbar ist.

15. Elektromagnetischer Drehantrieb, der als Tempelmotor ausgestaltet ist, **dadurch gekennzeichnet, dass** der elektromagnetische Drehantrieb eine Magnetlagervorrichtung (1) gemäss Anspruch 14 umfasst, sowie einen Rotor (3) mit einem scheibenförmigen oder ringförmigen magnetisch wirksamen Kern (31), wobei der Rotor (3) in die becherförmige Ausnehmung (211) einsetzbar ist, und wobei der Rotor (3) als Rotor (3) des elektromagnetischen Drehantriebs ausgestaltet ist.
